# DEMANDE DE BREVET EUROPEEN

(11) **EP 1 316 784 A1**
(43) Date de publication de la demande: **04.06.2003**
(21) Numéro de dépôt: 02023262.5
(22) Date de dépôt: 17.10.2002
(51) Int. Cl.: G01K 17/06

(54) **Enceinte représentative d'un système thermique et dispositif ainsi equipé**

(30) Priorité: 29.11.2001 FR 0115407
(71) Demandeur: Samman, Gérard, 06000 Nice (FR)
(72) Inventeur: Samman, Gérard, 06000 Nice (FR)
(74) Mandataire: Hautier, Jean-Louis

(57) **Abrégé**

La présente invention concerne une enceinte (2) représentative d'un système thermique pour la simulation et la détermination de la consommation d'énergie optimale dudit système, ladite enceinte (2) contenant un milieu (6) fluide et comprenant :
- des moyens de chauffage du milieu (6) commandés en fonction d'une consigne de température du milieu (6),

Cette consigne de température est généralement la même que la température moyenne de consigne à l'intérieur du bâtiment ou du système.
- des moyens de mise en mouvement du fluide constitutif du milieu (6)

Dans cette enceinte, les moyens de mise en mouvement sont des moyens pour établir un mouvement circulaire du flux.

L'invention concerne également un dispositif (1) de simulation et de détermination de la consommation d'énergie d'un système thermique comprenant ladite enceinte.

## Description

La présente invention concerne une enceinte représentative d'un système thermique pour la simulation et la détermination de la consommation d'énergie optimale du système. Elle concerne également un dispositif de simulation et de détermination de la consommation d'énergie optimale d'un tel système.

L'invention s'appliquera particulièrement aux analyses thermiques de bâtiments et notamment de bâtiments d'habitation. Elle pourra également trouver son application dans le domaine de la climatisation.

D'une façon générale, l'invention sera employée dans toute application dans laquelle il est nécessaire de représenter thermiquement un système donné. Il peut donc s'agir de locaux d'habitation, du corps humain ou de tout autre système.

On connaît déjà, dans ce domaine, un document du même demandeur publié sous le n° FR-A-2 546 296. Ce document divulgue un dispositif de simulation et de détermination de la consommation d'énergie d'un système, en particulier d'un bâtiment d'habitation, du type comprenant :
- des moyens formant enceinte, placés dans le même environnement que le système, et contenant un milieu donné,
- des moyens de chauffage du milieu,
- des moyens de régulation de la température du milieu par rapport à une valeur de consigne, qui contrôlent le fonctionnement des moyens de chauffage et
- des moyens de mesure sensibles à l'énergie apportée du milieu par les moyens de chauffage et aptes à délivrer un signal représentatif de cette énergie,
caractérisé par le fait que :
- les moyens formant enceinte comprennent :
   - une première enceinte extérieure qui enveloppe
   - une seconde enceinte intérieure contenant le milieu
et par le fait que
- le dispositif comprend en outre:
   - des moyens de réglage prévus de préférence sur ladite première enceinte extérieure, aptes à modifier les caractéristiques d'échange thermique ente le milieu contenu dans ladite seconde enceinte intérieure et l'environnement extérieur,
   de telle sorte que les moyens formant enceinte en coopération avec ledit milieu présentent des caractéristiques d'échange et d'inertie thermique s'apparentant à celles de la construction dudit système.

Dans un mode particulier de réalisation de ce dispositif, des moyens d'homogénéisation du milieu sont présents pour contrôler l'inertie thermique du dispositif.

Le dispositif présenté dans le document FR-A-2 546 296 donne globalement satisfaction en ce qu'il permet une représentation fidèle d'un système du point de vue thermique.

Il est par ailleurs adaptable aux paramètres thermiques du système considéré.

Un tel dispositif fonctionne par régulation thermique d'un fluide constitutif d'un milieu enfermé dans une enceinte. Des moyens de chauffage sont présents pour réguler la température autour d'une consigne prédéterminée et relative au système thermique à étudier.

Selon l'antériorité, des moyens d'homogénéisation du fluide peuvent être constitués dans l'enceinte. Il pourra notamment s'agir d'un tube vertical formant cheminée.

Il s'avère que l'efficacité de tels moyens d'homogénéisation peut être optimisée.

En effet, l'homogénéisation produite selon l'antériorité est imparfaite et ne procure que peu de contact du fluide en mouvement sur les parois de l'enceinte. L'échange thermique est donc optimisable.

On a alors intégré une micro-turbine dans l'enceinte pour améliorer l'homogénéité.

On constate une homogénéité des températures améliorée dans l'enceinte ainsi que de bonnes caractéristiques d'échange thermique entre le fluide et les parois.

Cependant, l'utilisation d'une turbine, engendre des risques de pannes et de parasites sur d'autres moyens électriques du dispositif et notamment le capteur.

Une telle turbine nécessite aussi une motorisation supplémentaire et diminue la fiabilité de l'installation.

Il existe donc actuellement un besoin d'assurer un mouvement du fluide différemment dans l'enceinte.

Pour résoudre ce problème, l'invention ici proposée comporte des moyens de création d'une circulation du fluide dans l'enceinte.

Un premier avantage de l'invention est qu'elle ne nécessite pas systématiquement de motorisation supplémentaire, au contraire de l'emploi d'une turbine.

Un autre but de l'invention est d'assurer un contact régulier du fluide et des parois afin de permettre de bons échanges thermiques. Pour y parvenir, le fluide est mis en mouvement de façon continue et circulaire dans l'enceinte afin de venir régulièrement à proximité des parois.

Un autre avantage de l'invention est d'assurer une grande homogénéisation du fluide et, par conséquent, de réduire, voire de supprimer, les gradients de température dans l'enceinte pouvant être dus à la localisation des moyens de chauffage.

D'autres buts et avantages apparaîtront au cours de la description qui suit d'un mode préféré de réalisation de l'invention qui n'en n'est cependant pas limitatif.

La présente invention concerne une enceinte représentative d'un système thermique pour la simulation et la détermination de la consommation d'énergie optimale dudit système, ladite enceinte contenant un milieu fluide et comprenant :
- des moyens de chauffage du milieu commandés en fonction d'une consigne de température du milieu,
- des moyens de mise en mouvement du fluide constitutif du milieu
caractérisée par le fait que les moyens de mise en mouvement sont des moyens pour établir un mouvement circulaire du fluide dans l'enceinte.

L'enceinte considérée pourra se présenter sous les variantes suivantes :
- les moyens de mise en mouvement comportent un déflecteur incliné et placé au-dessus des moyens de chauffage,
- le déflecteur est incliné de 15° à 45° par rapport à l'horizontale,
- la distance séparant les bords inférieur et supérieur du déflecteur de la paroi intérieure de l'enceinte est comprise entre 5 et 12 mm,
- l'enceinte contient un fluide gazeux de densité moindre par rapport à celle du fluide constitutif du milieu,
- la proportion de fluide gazeux est de 3 à 7% du volume du fluide constitutif du milieu,
- les moyens de chauffage sont constitués d'au moins une ampoule électrique alimentée en deçà de sa valeur nominale de tension,
- le fluide constitutif du milieu est une huile de composition chimique stable de viscosité variable.

L'invention concerne également un dispositif de simulation et de détermination de la consommation d'énergie optimale d'un système thermique présentant :
- une enceinte contenant un milieu fluide et comprenant des moyens de chauffage du milieu commandés en fonction d'une consigne de température du milieu et des moyens de mise en mouvement du fluide constitutif du milieu,
- des moyens de mesure sensibles à l'énergie apportée au milieu par les moyens de chauffage et aptes à délivrer un signal représentatif de cette énergie,
caractérisé par le fait qu'il comporte une enceinte selon l'invention.

Les dessins ci-joints sont donnés à titre d'exemples et ne sont pas limitatifs de l'invention. Ils représentent seulement un mode de réalisation de l'invention et permettront de la comprendre aisément.

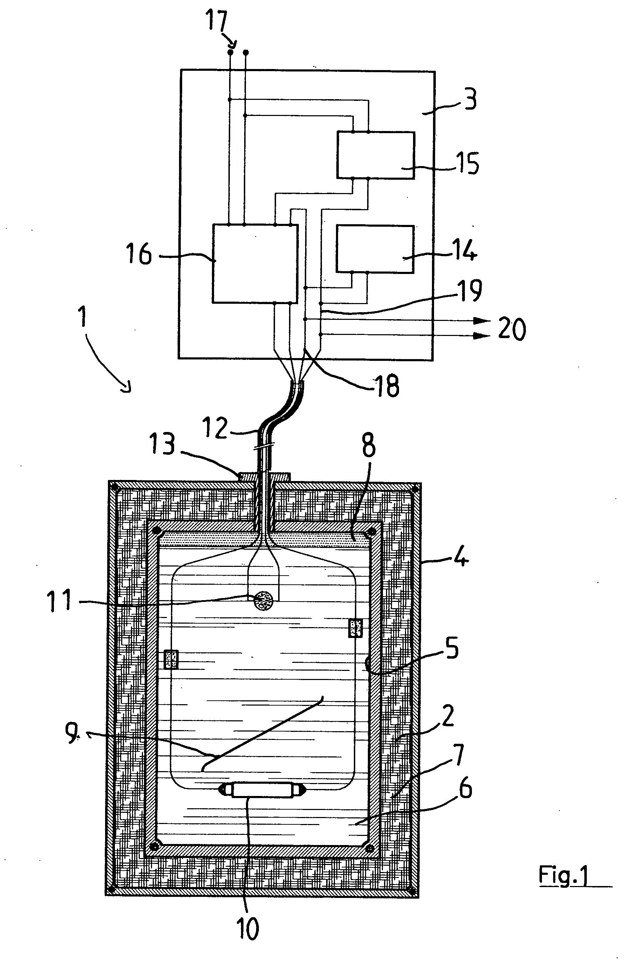

La figure 1 illustre une vue générale du dispositif selon l'invention intégrant une enceinte représentée en coupe.

Dans sa globalité, le dispositif 1 comporte une partie d'exploitation avantageusement intégrée dans un coffret d'exploitation 3 et une partie fonctionnant telle une sonde sous forme d'une enceinte 2.

Le coffret d'exploitation 3 est apte, d'une part, à assurer la commande de moyens de chauffage présents dans l'enceinte 2 et, d'autre part, à exploiter les informations issues du fonctionnement de l'enceinte 2. Le coffret d'exploitation 3 permet également l'alimentation en énergie, et particulièrement en énergie électrique, des moyens intégrés dans l'enceinte 2 (moyens de chauffage et capteur de température).

Plus particulièrement, le coffret d'exploitation 3 pourra comporter un thermostat 16, un transformateur de tension 15 apte à transformer l'énergie issue d'une source d'alimentation aux bornes d'alimentation 17 en une énergie en basse tension pour l'alimentation des moyens de chauffage.

Le coffret 3 comprend également un compteur 14 apte à compter le temps de fonctionnement des moyens de chauffage en fonction de la consigne de température fixée par le thermostat 16 et sous l'indication d'un capteur de température 11 placé dans l'enceinte 2 et plongé dans le milieu fluide.

Cette consigne de température est généralement la même que la température moyenne de consigne à l'intérieur du bâtiment ou du système.

En ce qui concerne la constitution du coffret d'exploitation et le choix du capteur 11 et des moyens de chauffage du milieu fluide, on se réfère ici explicitement à la description du document FR-A-2 546 296.

Ainsi, on pourra utiliser les éléments suivants :
- moyens de chauffage: ampoule 10 de tension nominale 12 volts, 0,3 ampères,
- compteur 14 sous forme de totalisateur à cristaux liquides ou électromécanique assurant les fonctions cumul et mémoire.

Différemment de l'antériorité, on utilise avantageusement un capteur 11 CTN de 60 KΩ associé à un thermostat 16 équipé d'un relais commandé. L'utilisation d'un capteur à haute impédance (60 KΩ au lieu de 1 KΩ précédemment) permet de s'affranchir de la longueur de la ligne 12. De plus, les enceintes 2 sont interchangeables, ce qui facilite le dépannage éventuel.

A titre d'exemple préféré, l'alimentation générale accessible aux bornes d'alimentation 17 est une source électrique secteur d'une tension de 220 volts.

A titre préféré, le transformateur 15 est tel qu'il délivre en sortie un signal électrique d'une tension de 10 volts, soit une tension inférieure à la tension nominale de l'ampoule 10 employée comme moyen de chauffage.

Une liaison est prévue entre le coffret d'exploitation 3 et l'enceinte 2 afin d'assurer la transmission des signaux, pour la commande des moyens de chauffage et pour l'exploitation des signaux de mesure issus du capteur 11. Une liaison filaire 12 de type courant pourra être employée à ce sujet avec 4 brins.

On décrit ci-après plus précisément un mode préféré de réalisation de l'enceinte 2 selon l'invention.

L'enceinte 2 comprend une paroi intérieure 5 étanche et apte à définir un volume intérieur de réception d'un milieu fluide 6. L'enceinte 2 comprend également une paroi extérieure 4 apte à être mise en contact avec l'air ambiant dans une application à la climatisation ou à un local d'habitation.

Les caractéristiques d'échange thermique entre l'environnement extérieur et le milieu 6 sont établies par réglage des propriétés thermiques de la paroi intérieure 5, de la paroi extérieure 4 et de leur zone intermédiaire 7.

A titre d'exemple, dans une application à la simulation et à la détermination de la consommation d'énergie d'un bâtiment, la paroi extérieure 4 peut être la suivante :
- nature : ABS gris
- épaisseur : 2 mm
- dimensions : 155 x 110 x 80 mm
- munie de 4 trous de 2 mm de diamètre à raison de 2 dans la paroi de fond et 2 dans les parois latérales opposées, si un réglage des caractéristiques d'échange thermique est recherché.

Les caractéristiques de la paroi intérieure 5 peuvent être les suivantes :
- dimensions : 112 x 60 x 30 mm
- centrée sur l'enceinte extérieure
- nature : ABS noir
- épaisseur : 3 mm

La zone intermédiaire 7 peut être constituée par une épaisseur adaptée de polystyrène expansé, par exemple de 20 mm.

Dans une autre application possible liée à la climatisation, l'enceinte 2 sera représentative du système constitué par le corps humain et ou des corps d'animaux. Dans ce cadre, l'enceinte 2 peut ne comporter qu'une paroi intérieure 5 dont les caractéristiques ont été décrites plus haut.

On pourra également recouvrir la paroi intérieure 5 d'une ou plusieurs couches de matériaux représentatives des caractéristiques d'échange thermique entre le corps humain et l'environnement, pour un utilisateur habillé. Dans ce cadre, on pourra mettre en oeuvre les normes ISO/DP 7730 et AFNOR X 35-203, ISO 7726.

Tel qu'illustrés en figure 1, les moyens de chauffage peuvent être constitués par une ampoule 10 placée sensiblement horizontalement dans l'enceinte 2. Le capteur 11 est placé à bonne distance des moyens de chauffage et, par exemple, dans la partie supérieure du milieu 6 dans l'enceinte 2.

L'enceinte selon l'invention présente des moyens de mise en mouvement sous forme de moyens pour établir un mouvement circulaire du fluide constitutif du milieu 6 dans l'enceinte 2.

A titre préféré, ces moyens sont constitués d'un déflecteur 9 présentant une surface inclinée et placée au-dessus des moyens de chauffage. Sous sa forme illustrée en figure 1, le déflecteur 9 assure une circulation dans le sens trigonométrique du fluide dans l'enceinte 2.

Il est avantageux de placer le capteur 11 dans la partie de l'enceinte 2 opposée aux moyens de chauffage par rapport au déflecteur 9, afin d'assurer la mesure de température dans une zone où l'homogénéité de température est maximale.

A titre préféré, on a constaté une grande efficacité de la mise en circulation avec les paramètres suivants :
- déflecteur 9 incliné de 15 à 45° par rapport à l'horizontale,
- distance entre les bordures inférieure et supérieure du déflecteur 9 par rapport à la paroi intérieure de l'enceinte comprise entre 5 et 12 mm.

Grâce à ces paramètres, le fluide est amené systématiquement à proximité ou en contact avec la paroi intérieure 5, ce qui favorise nettement les échanges thermiques.

Toujours afin d'optimiser la circulation du fluide, on a constaté, de façon surprenante, que la présence d'un fluide gazeux de moindre densité par rapport à celle du fluide constitutif du milieu 6 assurait une meilleure circulation. Un tel fluide gazeux, par exemple sous forme d'air présent dans des proportions volumiques de 3 à 7% du volume du fluide constitutif du milieu 6, donne satisfaction. Compte tenu de sa moindre densité, le fluide gazeux 8 se positionne en partie supérieure de l'enceinte 2, tel qu'illustré à la figure 1.

De plus, la présence de ce ciel gazeux permet au fluide de se dilater sans gêne en cas de surchauffe de l'enceinte par température extérieure (+ 50°c).

Pour assurer une bonne représentativité thermique du milieu 6, on pourra utiliser comme fluide une huile de composition chimique stable et de viscosité variable.

L'enceinte 2 peut enfin être fermée par un manchon 13 présentant un trou débouchant intérieur apte à laisser passer une gaine renfermant les 4 brins de la liaison filaire 12 entre l'enceinte 2 et le coffret d'exploitation 3. Au sein de cette liaison filaire 12, les fils 18 et 19 présentent respectivement le signal de commande des moyens de chauffage et la tension stabilisée, par exemple à 10 volts.

Les deux autres fils sont issus du capteur 11 et répercutés au niveau du thermostat 16 pour l'information de température mesurée.

On réalise ainsi une enceinte et un dispositif aptes à représenter de façon particulièrement fidèle la consommation d'énergie raisonnable d'un système. En comparant la consommation ainsi déterminée et la consommation réelle du système, il est possible de faire des économies substantielles et de réduire la pollution.

Dans le cas d'une application à la climatisation, on peut adapter à volonté les caractéristiques d'échange thermique de l'enceinte 2 par rapport à l'environnement extérieur pour représenter et simuler la présence d'occupants et la déperdition du corps humain, de même pour les corps d'animaux.

On peut ainsi réguler de façon plus efficace la climatisation dans un bâtiment.

### REFERENCES

- 1.: dispositif
- 2.: enceinte
- 3.: coffret d'exploitation
- 4.: paroi extérieure
- 5.: paroi intérieure
- 6.: milieu
- 7.: zone intermédiaire
- 8.: gaz
- 9.: déflecteur
- 10.: ampoule
- 11.: capteur
- 12.: liaison
- 13.: manchon
- 14.: compteur
- 15.: transformateur de tension
- 16.: thermostat
- 17.: bornes d'alimentation
- 18.: commande
- 19.: tension stabilisée
- 20.: signal 0-10v exploitable à distance

## Revendications

1. Enceinte (2) représentative d'un système thermique pour la simulation et la détermination de la consommation d'énergie optimale dudit système, ladite enceinte (2) contenant un milieu (6) fluide et comprenant :
- des moyens de chauffage du milieu (6) commandés en fonction d'une consigne de température du milieu (6),
- des moyens de mise en mouvement du fluide constitutif du milieu (6)
**caractérisée par le fait**
**que** les moyens de mise en mouvement sont des moyens pour établir un mouvement circulaire du fluide dans l'enceinte (2).

2. Enceinte (2) selon la revendication 1 **caractérisée par le fait**
**que** les moyens de mise en mouvement comportent un déflecteur (9) incliné et placé au-dessus des moyens de chauffage.

3. Enceinte (2) selon la revendication 2 **caractérisée par le fait**
**que** le déflecteur (9) est incliné de 15° à 45° par rapport à l'horizontale.

4. Enceinte (2) selon la revendication 2 ou la revendication 3 **caractérisée par le fait**
**que** la distance séparant les bords inférieur et supérieur du déflecteur (9) de la paroi intérieure (5) de l'enceinte (2) est comprise entre 5 et 12 mm.

5. Enceinte (2) selon l'une quelconque des revendications 1 à 4 **caractérisée par le fait**
**qu'**elle contient un fluide gazeux de densité moindre par rapport à celle du fluide constitutif du milieu (6).

6. Enceinte (2) selon la revendication 5 **caractérisée par le fait**
**que** la proportion de fluide gazeux est de 3 à 7% du volume du fluide constitutif du milieu (6).

7. Enceinte (2) selon l'une quelconque des revendications 1 à 6 **caractérisée par le fait**
**que** les moyens de chauffage sont constitués d'au moins une ampoule (10) électrique alimentée en deçà de sa valeur nominale de tension.

8. Enceinte (2) selon l'une quelconque des revendications 1 à 7 **caractérisée par le fait**
**que** le fluide constitutif du milieu (6) est une huile de composition chimique stable de viscosité variable.

9. Dispositif (1) de simulation et de détermination de la consommation d'énergie optimale d'un système thermique présentant :
- une enceinte (2) contenant un milieu (6) fluide et comprenant des moyens de chauffage du milieu (6) commandés en fonction d'une consigne de température du milieu (6) et des moyens de mise en mouvement du fluide constitutif du milieu (6),
- des moyens de mesure sensibles à l'énergie apportée au milieu par les moyens de chauffage et aptes à délivrer un signal représentatif de cette énergie,
**caractérisé par le fait**
**qu'**il comporte une enceinte (2) selon l'une quelconque des revendications 1 à 8.
